# EUROPÄISCHE PATENTSCHRIFT

(11) **EP 0 833 761 B1**
(45) Veröffentlichungstag und Bekanntmachung des Hinweises auf die Patenterteilung: **10.02.1999**
(21) Anmeldenummer: 96920691.1
(22) Anmeldetag: 17.06.1996
(51) Int. Cl.: B60Q 3/02

(54) **INNENLEUCHTE, INSBESONDERE FÜR KRAFTFAHRZEUGE**
INTERIOR LIGHT, IN PARTICULAR A VEHICLE COURTESY LIGHT
LAMPE INTERIEURE, NOTAMMENT POUR LES VEHICULES AUTOMOBILES

(30) Priorität: 22.06.1995 DE 19522739
(43) Veröffentlichungstag der Anmeldung: 08.04.1998
(73) Patentinhaber: EATON CONTROLS GmbH & Co. KG, 55445 Langenlonsheim (DE)
(72) Erfinder: KHOURY, Josef, D-55411 Bingen (DE)
(74) Vertreter: Becker, Bernd, Dipl.-Ing.
(86) Internationale Anmeldenummer: DE9601097
(87) Internationale Veröffentlichungsnummer: WO9700790

(56) Entgegenhaltungen:
- DE-C- 4 410 583
- DE-U- 8 904 240

## Beschreibung

Die Erfindung bezieht sich auf eine Innenleuchte, insbesondere für Kraftfahrzeuge, mit mindestens einer hinter einer Blende gehalterten und über Anschlußkontakte beaufschlagbaren Glühlampe.

Solche Innenleuchten sind aus der Praxis hinlänglich bekannt. Dabei befindet sich hinter der Blende die Glühlampe, die ihr Licht durch die Blende hindurch abgibt. Um eine große Lichtausbeute zu erreichen, ist auf der Rückseite der Blende ein Raster angeordnet, das für eine breite Ausstreuung des von der Glühlampe abgestrahlten Lichtes sorgt. Dadurch wird der vor der Blende liegende Raum, also der Innenraum eines Kraftfahrzeuges, weiträumig hell ausgestrahlt. Wenn ein Fahrer erstmals in der Dunkelheit ein für ihn fremdes Fahrzeug bedient, so benötigt er zur Orientierung eine Hilfe, mit der er die Bedienelemente sicher erkennen und finden kann. Dazu bleibt ihm keine andere Möglichkeit als die Innenbeleuchtung des Fahrzeuges einzuschalten. Dies wiederum führt dazu, daß auch Bereiche beleuchtet werden, an denen sich keine Bedienelemente befinden, wodurch ein zielgerichtetes Suchen nicht möglich ist. Das helle Licht der Innenleuchte bewirkt außerdem noch eine Blendung, und zwar zum einen in den Scheiben des Fahrzeuges und zum anderen in der Scheibe des Armaturenbrettes. Einerseits ist der um das Fahrzeug ablaufende Verkehr daher nicht immer klar erkennbar, wodurch sich oft gefährliche Situationen ergeben. Andererseits kann auch eine derart starke Blendung auftreten, daß der Fahrer überhaupt nichts mehr zu erkennen vermag.

Der Erfindung liegt die Aufgabe zugrunde, eine Innenleuchte der eingangs genannten Art zu schaffen, mit der ständig ein diffuses, blendfreies Licht bei gleichzeitig gegebenem einfachem Aufbau abgegeben werden kann.

Diese Aufgabe wird erfindungsgemäß dadurch gelöst daß hinter der Blende eine Auflichteinheit angeordnet ist, die mindestens einen gegebenenfalls dimmbaren Auflichtstrahler umfaßt, der einer die Blende durchragenden Blendenbohrung zugeordnet ist.

Durch diese Maßnahme wird von der Innenleuchte ein ständiges diffuses Licht abgegeben, das gegebenenfalls dimmbar ist und durch das ein sicheres Erkennen und Betätigen der Bedienelemente ohne Blendung des Fahrers sichergestellt ist, wobei dem Fahrer des Kraftfahrzeuges ein angenehmes Fahrgefühl vermittelt wird. Bei dem Einbau der Auflichteinheit in die Innenleuchte ist kein neuer Standort für ein Beleuchtungselement erforderlich. Damit entfallen die bei der Herstellung des Einbauortes entstehenden Kosten sowie die Montagekosten für das neue Beleuchtungselement.Die vorhandenen elektrischen Zuleitungen werden mitbenutzt, wodurch ebenfalls keine weiteren Kosten entstehen.

Nach einer vorteilhaften Ausgestaltung der Erfindung ist ein die Glühlampe und die Auflichteinheit aufnehmendes Gehäuse an der Blende befestigt. Durch diese Anordnung bildet die Innenleuchte eine Einheit die einen kompakten Aufbau darstellt und bei der die Bauteile vor Berührung und Beschädigung geschützt sind.

Um einen besonders kostengünstigen und stabilen Innenaufbau der Innenleuchte zu erhalten, ist nach einer vorteilhaften Weiterbildung der Erfindung in das Gehäuse eine Kontakteinheit eingesetzt, die die Glühlampe und die Anschlußkontakte trägt, und an der die Auflichteinheit anliegt, wobei die elektrische Verbindung der Glühlampe, der Anschlußkontakte und der Auflichteinheit durch die Kontakteinheit erfolgt. Die Halterung der Glühlampe und die aller elektrischen Strompfade sind mit nur einem als Stanzgitter in der Kontakteinheit vorliegenden Bauteil realisiert. Durch das Einsetzen der Kontakteinheit in das Gehäuse wird dieses versteift, wodurch eine große Stabilität gegeben ist.

Der Abstand der Innenleuchte zu den zu beleuchtenden Gegenständen und auch die Größe des auszuleuchtenden Feldes ist bei unterschiedlichen Fahrzeugmodellen verschieden. Somit werden Auflichteinheiten benötigt, die sich in ihren technischen Daten unterscheiden, und die als vorgefertigtes Bauteil bereitgestellt werden. Die Innenleuchte selbst soll jedoch in ihrer Konzeption identisch sein. Damit die Innenleuchte an die sich ändernden Anforderungen anpaßbar ist, ist zweckmäßigerweise die Auflichteinheit als eine Baueinheit in die Innenleuchte einsetzbar.

Nach einer vorteilhaften Ausführungsform sind an der Kontakteinheit und/oder dem Gehäuse Führungselemente vorgesehen, die mit an der Auflichteinheit angeordneten Führungsmitteln zusammenwirken. Dadurch liegt die Auflichteinheit bei gegebener sicherer Kontaktgabe in der Innenleuchte paßgenau und fest.

Damit die Bereitstellung der Führungsmittel und Führungselemente keine zusätzlichen Kosten verursacht, ist bevorzugt das Führungselement am Gehäuse ein an einer Außenwand angeordneter Steg, der in eine an der Auflichteinheit vorhandene Nut eingreift. Weiterhin ist zweckmäßigerweise das Führungselement in der Kontakteinheit mindestens ein Durchbruch, in den mindestens ein an der Auflichteinheit angeordneter Zapfen eingreift. Alle Führungsmittel und Führungselemente sind somit in Schließrichtung der Werkzeuge angeordnet und daher ohne zusätzlichen Arbeitsgang herstellbar.

Nach einer Weiterbildung der Erfindung umfaßt der Auflichtstrahler der Auflichteinheit eine ein Leuchtelement aufnehmende Hülse, deren Vorderkante innerhalb oder kurz oberhalb der Blende endet, wobei das Leuchtelement innerhalb der Hülse zurückgesetzt von der Vorderkante vorgesehen ist. Hierdurch wird einerseits stets eine definierte Lage des Auflichtstrahlers sichergestellt und andererseits durch das Leuchtelement keine Blendung verursacht. Das abgestrahlte Licht erstreckt sich in Längsrichtung der Hülse und beleuchtet somit nur die darunter befindlichen Gegenstände.

Um das von dem Leuchtelement abgestrahlte Licht optimal zu nutzen und dabei noch eine Blendung auszuschließen, besitzt nach einer weiteren vorteilhaften Ausgestaltung der Erfindung eine das Leuchtelement aufnehmende Licht fassung der Hülse an ihrem der Blende zugewandten Ende im Bereich der Vorderkante eine das Licht richtende Form.

Die Auflichteinheit soll einen kompakten Aufbau aufweisen, der ein einfaches Handling gewährleistet und kostengünstig herstellbar ist. Dies wird nach einer vorteilhaften Ausgestaltung dadurch erreicht, daß die Auflichteinheit ein umspritztes, Trennstellen aufweisendes Stanzgitter umfaßt, an das einstückig der Auflichtstrahler angespritzt ist, wobei die elektrisch notwendigen Kontaktflächen kunststoffrei sind. Somit ist auch in der Auflichteinheit der Vorteil realisiert, wie er von den mit Stanzgittern hergestellten Kontakteinheiten bekannt ist. Über die vorgesehenen Trennstellen lassen sich unterschiedliche Strompfade zur Verfügung stellen, womit die Auflichteinheit an unterschiedliche Anforderungen anpaßbar ist.

Nach einer weiteren Ausführungsform sind am Stanzgitter der Auflichteinheit Kontaktfedern angeformt, die an Kontaktflächen der Kontakteinheit zur Anlage kommen. Die Kontaktfedern, die bei der Herstellung des Stanzgitters ausgestanzt und gebogen werden, übernehmen somit die sichere Stromverbindung der Auflichteinheit zur Kontakteinheit, ohne daß weitere Teile oder Arbeitsgänge, wie etwa Löten oder Widerstandschweißen, notwendig sind. An den den Kontaktfedern entsprechenden Bereichen sind die Kontaktflächen frei von Kunststoff, damit die Federn direkt kontaktierend zur Anlage kommen.

Um eine verbesserte Ausleuchtung trotz diffusem Licht zu erzielen, weist nach einer vorteilhaften Ausgestaltung die Auflichteinheit zwei Auflichtstrahler auf, in die als Leuchtelemente dienende Leuchtdioden eingesetzt sind, wobei in einer Außenwand der Auflichteinheit die Anschlußdrähte der Leuchtelemente innerhalb von Schlitzen elektrisch verbunden sind. Bei dieser Ausgestaltung sind gleichzeitig die Anschlußdrähte der Leuchtdioden bzw. deren Verbindungen vor Beschädigung geschützt, wobei beim Einsatz von Leuchtdioden keine starken, blendenden Lichtquellen entstehen.

Die Leuchtelemente müssen elektrisch angeschlossen werden. Um den zusätzlichen Einsatz von elektrischen Leitungen zu vermeiden und um somit Kosten zu sparen, liegt bevorzugt das Stanzgitter der Auflichteinheit in mindestens einem Schlitz frei, wobei je ein Anschlußdraht eines Leuchtelementes dort angeschlossen ist, und in einem anderen Schlitz die restlichen Anschlußdrähte des Leuchtelementes unter Zwischenschaltung eines elektronischen Bauteiles verbunden sind.

Nach einer Weiterbildung der Erfindung erfolgt die Aktivierung der Auflichteinheit über einen zentralen Lichtschalter. Dadurch wird von der Auflichteinheit nur dann Licht abgestrahlt, wenn über den zentralen Lichtschalter das Hauptlicht eingeschaltet ist. Daraus ergibt sich der Vorteil, daß kein unnötiger Energieverbrauch durch den Einsatz der Auflichteinheit entsteht.

Wird das Auflicht nicht benötigt, so ist dies auch trotz eingeschaltetem Hauptlicht ausschaltbar. Um dies zu ermöglichen ist bevorzugt innerhalb des Gehäuses mindestens ein durch die Blende hindurchragender Schalter vorgesehen, der mechanisch und/oder elektrisch mit der Kontakteinheit verbunden ist. Bei der Montage der Kontakteinheit wird dieser Schalter in der Innenleuchte mitmontiert und den Strompfaden des Stanzgitters zugeordnet, die das Anschalten und das Ausschalten des Leuchtelementes bewirkenden Vorgänge bewerkstelligen.

Zweckmäßigerweise besitzt die Blende mindestens einen undurchsichtigen, der Auflichteinheit zugeordneten Bereich. Damit ist die hinter der Blende angebrachte Auflichteinheit nicht sichtbar. Die Innenleuchte erhält dadurch ein geschmackvolles Äußeres, wobei der undurchsichtige Bereich in Farbe und Form an die übrige Umgebung anpaßbar ist.

Der der Erfindung zugrunde liegende Gedanke wird in der nachfolgenden Beschreibung anhand eines Ausführungsbeispieles, das in der Zeichnung dargestellt ist, näher erläutert. Es zeigen:

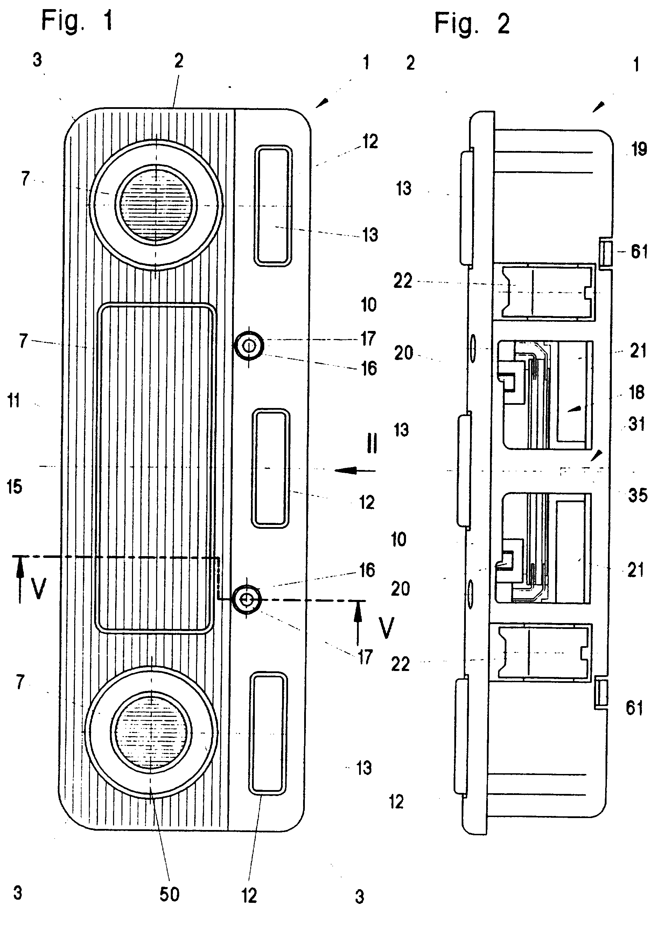

- Fig. 1: eine Draufsicht auf eine erfindungsgemäße Innenleuchte eines Kraftfahrzeuges,
- Fig. 2: eine Seitenansicht der Innenleuchte gemäß Fig. 1 in Richtung des Pfeiles II,

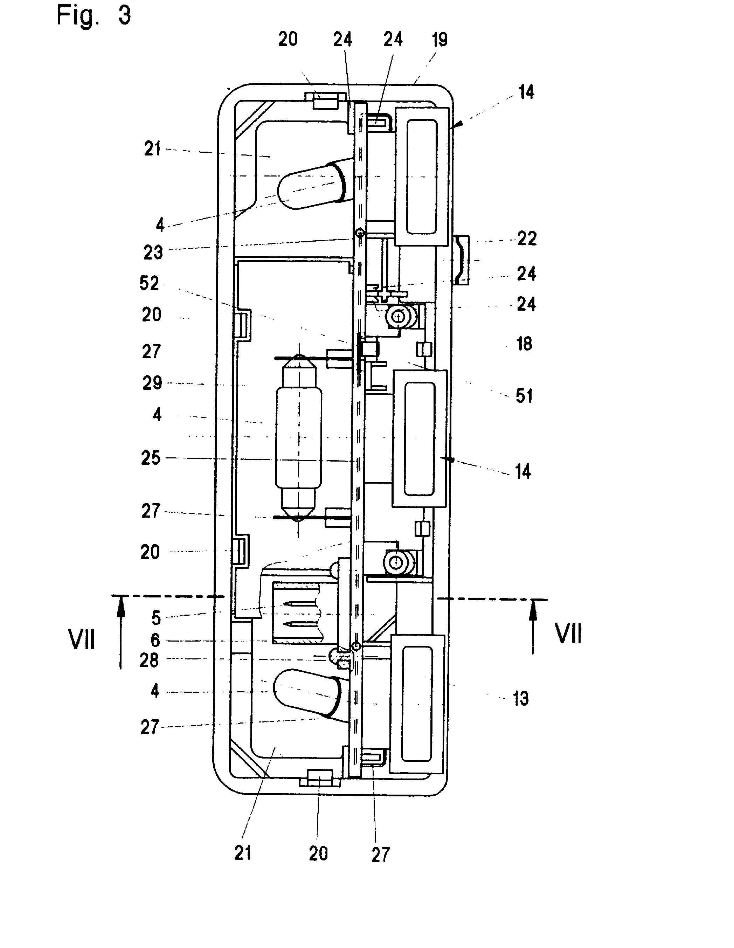

- Fig. 3: eine Draufsicht auf die Innenleuchte gemäß Fig. 1 ohne Blende,

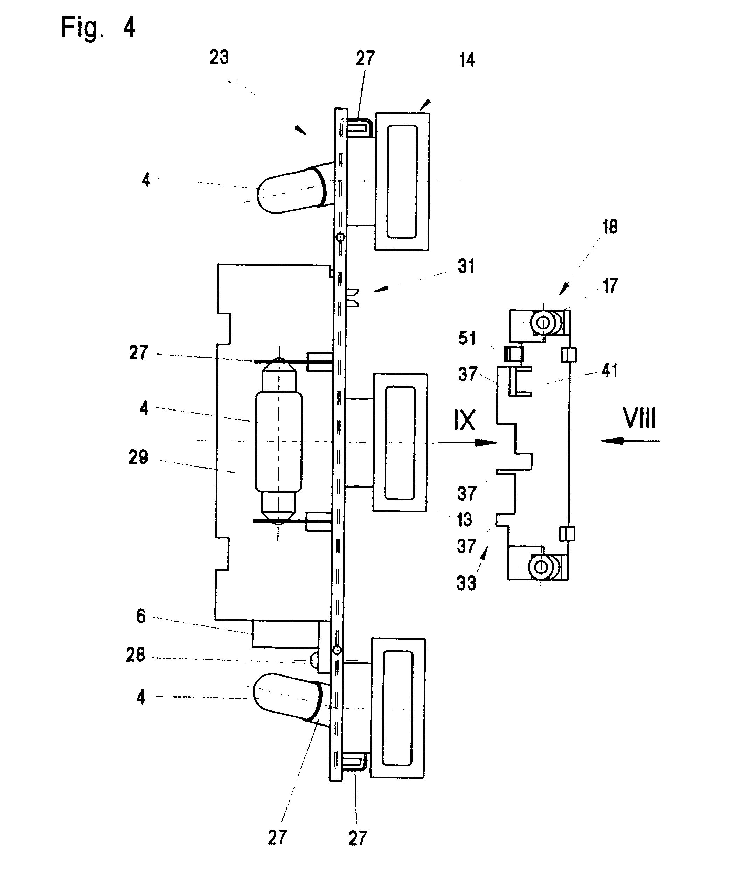

- Fig. 4: eine Draufsicht auf eine aus dem Gehäuse entfernte Kontakteinheit mit seitlich daneben dargestellter Auflichteinheit,
- Fig. 5: einen Schnitt durch die Innenleuchte gemäß Fig. 1 in Richtung der Linie V-V in vergrößerter Darstellung,
- Fig. 6: eine alternative Ausführung des Auflichtstrahlers gemäß der Einzelheit VI in Fig. 5,
- Fig. 7: einen Teilschnitt gemäß Fig. 3 in Richtung der Pfeile VII-VII in vergrößerter Darstellung,

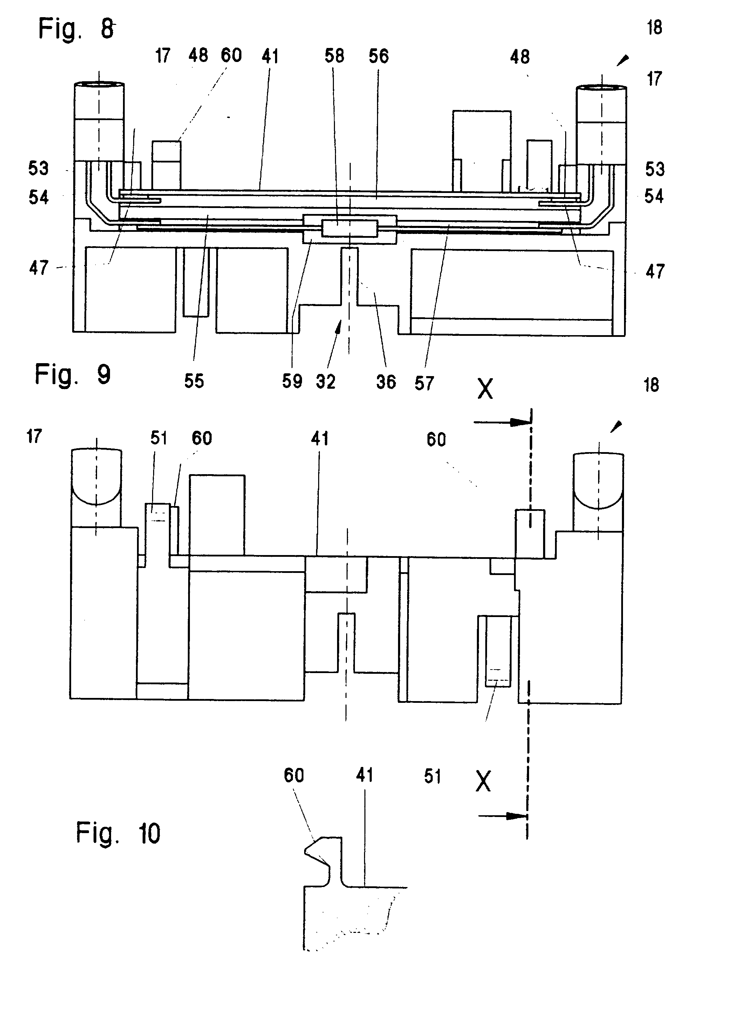

- Fig. 8: eine Ansicht auf die Auflichteinheit in Pfeilrichtung VIII gemäß Fig. 3 in gedrehter und vergrößerter Darstellung,
- Fig. 9: eine Ansicht auf die Auflichteinheit in Pfeilrichtung IX gemäß Fig. 3 in gedrehter und vergrößerter Darstellung und
- Fig. 10: einen Teilschnitt gemäß Fig. 9 in Richtung der Pfeile X-X.

Die Innenleuchte 1 weist eine nach ihrem Einbau in ein Kraftfahrzeug von außen sichtbare Blende 2 auf, die nahezu rechteckig ist und an den Ecken mit Übergangsradien 3 versehen ist. Hinter der Blende 2 befinden sich Glühlampen 4, die in Bezug auf die Blende 2 gehaltert sind. Außerdem sind hinter der Blende 2 noch Anschlußkontakte 5 vorhanden, über die die Glühlampen 4 mit Strom versorgt werden. Die Anschlußkontakte 5 sind zum Schutz vor Beschädigung und Berührung von einem Steckerkragen 6 umgeben. Jeder der drei hinter der Blende 2 angeordneten Glühlampen 4 ist ein Leuchtfenster 7 zugeordnet, wobei hinter dem mittleren Leuchtfenster 7 eine Soffittenlampe und hinter den äußeren als Spotlicht ausgelegten Leuchtfenstern 7 jeweils eine gesockelte Glühlampe 4 angeordnet ist. Um das von den Glühlapen 4 abgestrahlte Licht zu streuen oder zu bündeln, ist auf der Innenseite 8 der Blende 2 eine Rasterung 9 angebracht. Die Rasterung 9 verläuft parallel zur Längsseite 11 der Innenleuchte 1 ungefähr in der Breite der Leuchtfenster 7. In einem undurchsichtigen Bereich 10 neben den Leuchtfenstern 7 sind im Querschnitt rechteckige Blendendurchbrüche 12 eingelassen, durch die Tasten 13 von hinter der Blende 2 angeordneten Schaltern 14 hindurchragen. Im Übergangsbereich zwischen der Rasterung 9 und dem undurchsichtigen Bereich 10 befinden sich noch im undurchsichtigen Bereich 10 symmetrisch zur Mittellinie 15 zwei Blendenbohrungen 16, die die Blende 2 durchragen. Jeder Blendenbohrung 16 ist ein Auflichtstrahler 17 zugeordnet, der zu einer hinter der Blende 2 angeordneten Auflichteinheit 18 gehört.

Hinter der Blende 2 befindet sich weiterhin ein Gehäuse 19, das über Klipsverbindungen 20 mit der Blende 2 verbunden ist. Das Gehäuse 19 nimmt sowohl die Glühlampen 4 als auch die Auflichteinheit 18 auf, d.h. das Gehäuse umschließt die hinter der Blende 2 angeordneten Einzelteile. Zur Wärmeableitung besitzt das Gehäuse 2 noch diverse Gehäuseausbrüche. Durch einen Gehäuseausbruch 21 sind auch die Anschlußkontakte 5 erreichbar. An den Außenwänden des Gehäuses 19 sind Rasten 22 angebracht, mit denen die Innenleuchte 1 in einer nicht dargestellten Montageöffnung festgesetzt wird.

Des weiteren ist eine Kontakteinheit 23 in das Gehäuse 19 eingesetzt. Dazu sind am Gehäuse 2 Führungstege 24 angeformt, die entsprechende Teile der Kontakteinheit 23 führend aufnehmen. Der Festsitz der Kontakteinheit 23 ist durch eine Klipsverbindung 61 mit dem Gehäuse 19 realisiert. Die Kontakteinheit 23 besteht aus einem Stanzgitter 25, das mit Kunststoff 26 umspritzt ist. Die Anschlußkontakte 5 sowie die Glühlampen 4 sind an der Kontakteinheit 23 gehaltert. Für die Glühlampen 4 sind dazu Stanzstreifen 27 aus dem Stanzgitter 25 herausgebogen, die die Glühlampen 4 zwischen sich aufnehmen. Die Anschlußkontakte 5 sind mechanisch und elektrisch mit dem Stanzgitter 25 verbunden (nicht dargestellt). Sie sind von dem Steckerkragen 6 umgeben, der über Nietverbindungen 28 an der Kontakteinheit 23 befestigt ist. Hinter der mittleren Glühlampe 4 befindet sich ein Leuchtschirm 29, der ebenfalls mit der Kontakteinheit 23 verbunden ist. An der den Glühlampen 4 abgewandten Seite der Kontakteinheit 23 liegt die Auflichteinheit 18 an der Kontakteinheit 23 an. Die elektrischen Verbindungen, d.h. alle Strompfade zu und von den Glühlampen 4, der Auflichteinheit 18, den Schaltern 14 und den Anschlußkontakten 5 erfolgen durch die Kontakteinheit 23. Lediglich innerhalb der Auflichteinheit 18 erfolgt eine weitere Verbindung, die später beschrieben wird.

Die Auflichteinheit 18 liegt als eine vorgefertigte Baueinheit vor und wird dementsprechend montiert. Je nach Anforderung weist sie unterschiedliche technische Merkmale auf. Damit die Auflichteinheit 18 einen sicheren Sitz innerhalb der Innenleuchte 1 hat, ist an der Kontakteinheit 23 ein Führungselement 30 und am Gehäuse 19 ein Führungselement 31 vorhanden, die mit entsprechenden, an der Auflichteinheit 17 angebrachten Führungsmitteln 32 und 33 zusammenwirken. Das Führungselement 31 am Gehäuse 19 ist ein an einer Außenwand 34 angeordneter Steg 35. Mit diesem Steg 35 wirkt eine Nut 36 zusammen, die das Führungmittel 32 an der Auflichteinheit 18 darstellt. Das Führungselement 30 an der Kontakteinheit 23 ist ein Durchbruch 38, in den ein an der Auflichteinheit 18 angeformter Zapfen 37 eintaucht, der das Führungsmittel 33 darstellt.

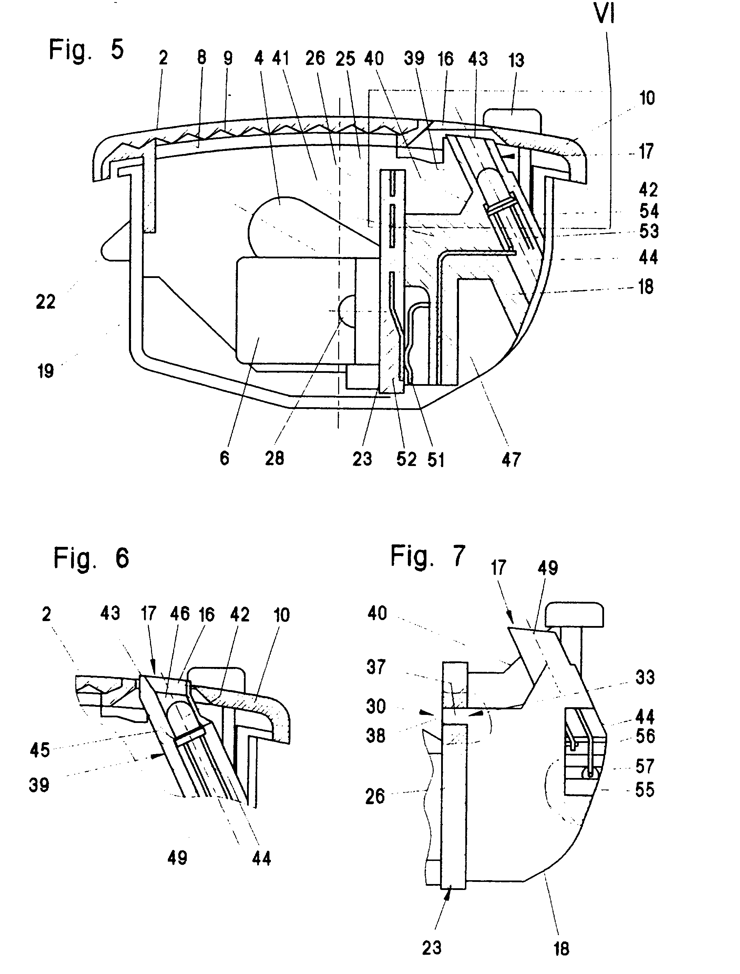

Der Auflichtstrahler 17 der Auflichteinheit 18 besteht aus einer Hülse 39, die über eine Kante 40 mit einem Quersteg 41 der Auflichteinheit 18 verbunden ist. Dabei ist die Hülse 39 der Bereich des Auflichtstrahlers 17, der in die Blendenbohrung 16 der Blende 2 hineinragt. Die Hülse 39 ist an beiden Enden offen. Von der Rückseite 44 der Hülse 39 wird ein Leuchtelement 42 bis zu einer vorbestimmten Lage eingeschoben. Diese Lage ist gemäß Fig. 6 durch eine umlaufende Schulter 45 vorbestimmt. Die Vorderkante 43 der Hülse 39 endet im Bereich der Blende 2, und zwar innerhalb der Blende 2 (Fig. 5).

Eine alternative Ausgestaltung (Fig. 6) sieht vor, daß die Vorderkante 43 über die Blende 2 hinausragt, also oberhalb der Blende 2 endet. Hierbei weist eine Lichtfassung 46, die innerhalb der Hülse 39 angeordnet ist, im Bereich der Vorderkante 43 eine Form auf, die Einfluß auf die Lichtausrichtung der vom Leuchtelement 42 abgesandten Lichtstrahlen ausübt. Auf diese Weise wird ein zusätzlicher Einfluß auf die Lichtausrichtung genommen, durch die der Beleuchtungsbereich vergrößert wird und trotzdem eine Blendung ausgeschlossen ist.

Innerhalb der Auflichteinheit 18 befindet sich ein mit Kunststoff umspritztes, Trennstellen (nicht dargestellt) aufweisendes Stanzgitter 47, das einen abgewinkelten Verlauf aufweist. Das Stanzgitter 47 ist über die gesammte Breite des Quersteges 41 eingebettet. Dort, wo der Zugang zu Kontaktflächen 48 notwendig ist, ist das Stanzgitter 47 nicht mit Kunststoff umspritzt. Beim Umspritzen des Stanzgitters 47, also bei der Herstellung der Auflichteinheit 18, ist gleichzeitig der Auflichtstrahler 17 mitangespritzt. Die Achse 49 des Auflichtstrahlers 17 verläuft schräg zur Mittelachse 50 der Innenleuchte 1, um somit eine Ausleuchtung des gewünschten Bereiches zu erhalten.

Diametral gegenüberliegend sind am Stanzgitter 47 der Auflichteinheit 18 Kontaktfedern 51 einstückig mitangeformt. Diese Kontaktfedern 51 kommen bei der Anlage der Auflichteinheit 18 an die Kontakteinheit 23 an freiliegenden Kontaktflächen 52 des Stanzgitters 25 zur Anlage und stellen die elektrische Verbindung her. Die Kontaktfedern 51 sind so ausgebildet, daß sie unter Vorspannung an den Kontaktflächen 52 zur Anlage kommen.

Die Auflichteinheit 18 besitzt zwei Auflichtstrahler 17, in denen je ein Leuchtelement 42 eingesetzt ist. Das Leuchtelement 42 ist eine Leuchtdiode, deren Anschlußdrähte 53 und 54 aus der Rückseite 44 der Hülse 39 herausragen. In einer Außenwand 55 der Auflichteinheit 18 sind über die Länge des Quersteges 41 Schlitze 56 und 57 eingelassen. In den Schlitzen 56 und 57 sind die Anschlußdrähte 53 und 54 der Leuchtelemente 42 elektrisch angeschlossen. Dazu liegt im Schlitz 56 das Stanzgitter 47 frei, und ein Anschlußdraht 53 ist dort angelötet. Die Anschlußdrähte 54 der Leuchtelemente 42 liegen in dem Schlitz 57 ein und sind dort unter Zwischenschaltung eines Widerstandes 58 miteinander verbunden. Zum Einbetten des Widerstandskörpers weist der Schlitz 57 eine Aufweitung 59 auf. Auf der Oberseite des Quersteges 41 sind Rastnasen 60 angespritzt, die zur Klipsverbindung 20 gehören.

Das Anschalten der Auflichteinheit 18 erfolgt über einen zentralen Lichtschalter (nicht dargestellt). Dazu in Reihe befindet sich einer der Schalter 14 im Gehäuse 19 der Innenleuchte 1. Somit ist die Auflichteinheit 18 über den zentralen Lichtschalter direkt aktiviert, und kann über den entsprechenden in der Innenleuchte 1 vorhandenen Schalter 14 gedimmt oder deaktiviert werden. Jeder der Schalter 14 ist an der Kontakteinheit 23 befestigt. Er verbindet die als Stanzstege ausgebildeten Strompfade der Kontakteinheit 23.

Die Blende 2 ist in unterschiedliche Bereiche aufgeteilt. So ist neben den durchsichtigen Leuchtfenstern 7 ein undurchsichtiger Bereich 10 vorhanden, hinter dem sich die Auflichteinheit 18 sowie die Schalter 14 befinden. Von den Schaltern 14 ragen die Tasten 13 durch diesen Bereich 10 hindurch. Von der Auflichteinheit 18 ist lediglich die Vorderkante 43 der Auflichtstrahler 17 in den Blendenbohrungen 16 sichtbar.

## Patentansprüche

1. Innenleuchte, insbesondere für Kraftfahrzeuge, mit mindestens einer hinter einer Blende gehalterten und über Anschlußkontakte beaufschlagbaren Glühlampe, dadurch gekennzeichnet, daß hinter der Blende (2) eine Auflichteinheit (18) angeordnet ist, die mindestens einen gegebenenfalls dimmbaren Auflichtstrahler (17) umfaßt, der einer die Blende (2) durchragenden Blendenbohrung (16) zugeordnet ist.

2. Innenleuchte nach Anspruch 1, dadurch gekennzeichnet, daß ein die Glühlampe (4) und die Auflichteinheit (18) aufnehmendes Gehäuse (19) an der Blende (2) befestigt ist.

3. Innenleuchte nach Anspruch 1 oder 2, dadurch gekennzeichnet, daß in das Gehäuse (19) eine Kontakteinheit (23) eingesetzt ist, die die Glühlampe (4) und die Anschlußkontakte (5) trägt, und an der die Auflichteinheit (18) anliegt, wobei die elektrische Verbindung der Glühlampe (4), der Anschlußkontakte (5) und der Auflichteinheit (18) durch die Kontakteinheit (23) erfolgt.

4. Innenleuchte nach einem der Ansprüche 1 bis 3, dadurch gekennzeichnet, daß die Auflichteinheit (18) als eine Baueinheit in die Innenleuchte einsetzbar ist.

5. Innenleuchte nach einem der Ansprüche 1 bis 4, dadurch gekennzeichnet, daß an der Kontakteinheit (23) und/oder dem Gehäuse (19) Führungselemente (30, 31) vorgesehen sind, die mit an der Auflichteinheit (18) angeordneten Führungsmitteln (32, 33) zusammenwirken.

6. Innenleuchte nach einem der Ansprüche 1 bis 5, dadurch gekennzeichnet, daß das Führungselement (31) am Gehäuse (19) ein an einer Außenwand (34) angeordneter Steg (35) ist, der in eine an der Auflichteinheit (18) vorhandene Nut (36) eingreift.

7. Innenleuchte nach einem der Ansprüche 1 bis 6, dadurch gekennzeichnet, daß das Führungselement (30) in der Kontakteinheit (23) mindestens ein Durchbruch (38) ist, in den mindestens ein an der Auflichteinheit (18) angeordneter Zapfen (37) eingreift.

8. Innenleuchte nach einem der Ansprüche 1 bis 7, dadurch gekennzeichnet, daß der Auflichtstrahler (17) der Auflichteinheit (18) eine ein Leuchtelement (42) aufnehmende Hülse (39) umfaßt, deren Vorderkante (43) innerhalb oder kurz oberhalb der Blende (2) endet, wobei das Leuchtelement (42) innerhalb der Hülse (39) zurückgesetzt von der Vorderkante (43) vorgesehen ist.

9. Innenleuchte nach einem der Ansprüche 1 bis 8, dadurch gekennzeichnet, daß eine das Leuchtelement (42) aufnehmende Lichtfassung (46) der Hülse (39) an ihrem der Blende (2) zugewandten Ende im Bereich der Vorderkante (43) eine das Licht richtende Form besitzt.

10. Innenleuchte nach einem der Ansprüche 1 bis 9, dadurch gekennzeichnet, daß die Auflichteinheit (18) ein umspritztes, Trennstellen aufweisendes Stanzgitter (47) umfaßt, an das einstückig der Auflichtstrahler (17) angespritzt ist, wobei die elektrisch notwendigen Kontaktflächen (48) kunststoffrei sind.

11. Innenleuchte nach einem der Ansprüche 1 bis 10, dadurch gekennzeichnet, daß am Stanzgitter (47) der Auflichteinheit (18) Kontaktfedern (51) angeformt sind, die an Kontaktflächen (52) der Kontakteinheit (23) zur Anlage kommen.

12. Innenleuchte nach einem der Ansprüche 1 bis 11, dadurch gekennzeichnet, daß die Auflichteinheit (18) zwei Auflichtstrahler (17) aufweist, in die als Leuchtelemente (42) dienende Leuchtdioden eingesetzt sind, wobei in einer Außenwand (55) der Auflichteinheit (18) die Anschlußdrähte (53, 54) der Leuchtelemente (42) innerhalb von Schlitzen (56, 57) elektrisch verbunden sind.

13. Innenleuchte nach einem der Ansprüche 1 bis 12, dadurch gekennzeichnet, daß das Stanzgitter (47) der Auflichteinheit (18) in mindestens einem Schlitz (56) freiliegt, wobei je ein Anschlußdraht (53) eines Leuchtelementes (42) dort angeschlossen ist, und in einem anderen Schlitz (57) die restlichen Anschlußdrähte (54) des Leuchtelementes (42) unter Zwischenschaltung eines elektronischen Bauteiles (58) verbunden sind.

14. Innenleuchte nach einem der Ansprüche 1 bis 13, dadurch gekennzeichnet, daß die Aktivierung der Auflichteinheit (18) über einen zentralen Lichtschalter erfolgt.

15. Innenleuchte nach einem der Ansprüche 1 bis 14, dadurch gekennzeichnet, daß innerhalb des Gehäuses (19) mindestens ein durch die Blende (2) hindurchragender Schalter (14) vorgesehen ist, der mechanisch und/oder elektrisch mit der Kontakteinheit (23) verbunden ist.

16. Innenleuchte nach einem der Ansprüche 1 bis 15, dadurch gekennzeichnet, daß die Blende (2) mindestens einen undurchsichtigen der Aufleichteinheit (18) zugerodneten Bereich (10) besitzt.

## Claims

1. Interior light, more especially for automotive vehicles, including at least one incandescent lamp, which is mounted behind a cover panel and can be acted upon via connection contacts, characterised in that an incident-light unit (18) is disposed behind the cover panel (2) and includes at least one, possibly dimmable, incident-light emitter (17), which is associated with a cover panel bore (16), which extends through the cover panel (2).

2. Interior light according to claim 1, characterised in that a housing (19), which accommodates the incandescent lamp (4) and the incident-light unit (18), is secured on the cover panel (2).

3. Interior light according to claim 1 or 2, characterised in that a contact unit (23) is inserted in the housing (19) and is provided with the incandescent lamp (4) and the connection contacts (5), the incident-light unit (18) abutting against said incident-light unit, the electrical connection of the incandescent lamp (4), the connection contacts (5) and the incident-light unit (18) being accomplished by the contact unit (23).

4. Interior light according to one of claims 1 to 3, characterised in that the incident-light unit (18) is insertable in the interior light as a structural unit.

5. Interior light according to one of claims 1 to 4, characterised in that guide elements (30,31) are provided on the contact unit (23) and/or on the housing (19) and co-operate with guide means (32, 33), which are disposed on the incident-light unit (18).

6. Interior light according to one of claims 1 to 5, characterised in that the guide element (31) on the housing (19) is a web (35), which is disposed on an external wall (34) and engages in a groove (36) provided on the incident-light unit (18).

7. Interior light according to one of claims 1 to 6, characterised in that the guide element (30) in the contact unit (23) is at least one opening (38), in which there engages at least one pin (37), which is disposed on the incident-light unit (18).

8. Interior light according to one of claims 1 to 7, characterised in that the incident-light emitter (17) of the incident-light unit (18) includes a sleeve (39), which accommodates a light element (42), the front edge (43) of said sleeve terminating within or just above the cover panel (2), the light element (42) being provided within the sleeve (39) in an offset manner from the front edge (43).

9. Interior light according to one of claims 1 to 8, characterised in that a light socket (46) of the sleeve (39), which socket accommodates the light element (42), has a configuration, which directs the light, at its end facing the cover panel (2) in the region of the front edge (43).

10. Interior light according to one of claims 1 to 9, characterised in that the incident-light unit (18) includes an injection-moulded pressed screen (47), which has separation locations and with which the incident-light emitter (17) is integrally moulded, the electrically necessary contact faces (48) being free of plastics material.

11. Interior light according to one of claims 1 to 10, characterised in that contact springs (51) are moulded on the pressed screen (47) of the incident-light unit (18) and come to abut against contact faces (52) of the contact unit (23).

12. Interior light according to one of claims 1 to 11, characterised in that the incident-light unit (18) includes two incident-light emitters (17), in which light diodes, serving as light elements (42), are inserted, the connecting wires (53, 54) of the light elements (42) being electrically connected in an external wall (55) of the incident-light unit (18) within slots (56, 57).

13. Interior light according to one of claims 1 to 12, characterised in that the pressed screen (47) of the incident-light unit (18) is exposed in at least one slot (56), one connecting wire (53) of each light element (42) communicating at said slot, and the remaining connecting wires (54) of the light element (42) being connected in a different slot (57) with the interposition of an electronic component (58).

14. Interior light according to one of claims 1 to 13, characterised in that the activation of the incident-light unit (18) is effected via a central light switch.

15. Interior light according to one of claims 1 to 14, characterised in that at least one switch (14) is provided within the housing (19), said switch protruding through the cover panel (2) and being mechanically and/or electrically connected to the contact unit (23).

16. Interior light according to one of claims 1 to 15, characterised in that the cover panel (2) has at least one opaque region (10) associated with the incident-light unit (18).

## Revendications

1. Eclairage intérieur, en particulier pour véhicules automobiles, comportant au moins une ampoule à incandescence fixée derrière un écran et pouvant être sollicitée par des contacts de branchement, caractérisé en ce que derrière l'écran (2) est disposée une unité de lumière incidente (18), qui comprend au moins un émetteur de lumière incidente (17), éventuellement variable, qui est associé à un perçage d'écran (16) traversant l'écran (2).

2. Eclairage intérieur selon la revendication 1, caractérisé en ce qu'un boîtier (19), logeant l'ampoule à incandescence (4) et l'unité de lumière incidente (18), est fixé sur l'écran (2).

3. Eclairage intérieur selon la revendication 1 ou 2, caractérisé en ce que dans le boîtier (19) est insérée une unité de contact (23), qui porte l'ampoule à incandescence (4) et les contacts de branchement (5) et contre laquelle s'applique l'unité de lumière incidente (18), la liaison électrique de l'ampoule à incandescence (4), des contacts de branchement (5) et de l'unité de lumière incidente (18) étant assurée par l'unité de contact (23).

4. Eclairage intérieur selon l'une des revendications 1 à 3, caractérisé en ce que l'unité de lumière incidente (18) peut être insérée en tant qu'unité de construction dans la lampe intérieure.

5. Eclairage intérieur selon l'une des revendications 1 à 4, caractérisé en ce que sur l'unité de contact (23) et/ou le boîtier (19) sont prévus des éléments de guidage (30, 31), qui coopèrent avec des moyens de guidage (32, 33) disposés sur l'unité de lumière incidente (18).

6. Eclairage intérieur selon l'une des revendications 1 à 5, caractérisé en ce que l'élément de guidage (31) sur le boîtier (19) est une nervure (35) disposée sur une paroi extérieure (34), qui s'engage dans une rainure (36) se trouvant sur l'unité de lumière incidente (18).

7. Eclairage intérieur selon l'une des revendications 1 à 6, caractérisé en ce que l'élément de guidage (30) dans l'unité de contact (23) est au moins un ajour (38), dans lequel s'engage au moins un tenon (37) disposé sur l'unité de lumière incidente (18).

8. Eclairage intérieur selon l'une des revendications 1 à 7, caractérisé en ce que l'émetteur de lumière incidente (17) de l'unité de lumière incidente (18) comprend un manchon (39), logeant un élément d'éclairage (42), dont le bord avant (43) se termine à l'intérieur ou juste au-dessus de l'écran (2), l'élément d'éclairage (42) étant prévu à l'intérieur du manchon (39), en retrait du bord avant (43).

9. Eclairage intérieur selon l'une des revendications 1 à 8, caractérisé en ce qu'une douille (46) du manchon (39), logeant l'élément d'éclairage (42), présente une forme dirigeant la lumière, à son extrémité tournée vers l'écran (2), dans la zone du bord avant (43).

10. Eclairage intérieur selon l'une des revendications 1 à 9, caractérisé en ce que l'unité de lumière incidente (18) comprend une grille estampée (47), encastrée par injection, présentant des points de séparation, sur laquelle l'émetteur de lumière incidente (17) est moulé par injection d'un seul tenant, les surfaces de contact (48) électriquement nécessaires étant exemptes de matière plastique.

11. Eclairage intérieur selon l'une des revendications 1 à 10, caractérisé en ce que sur la grille estampée (47) de l'unité de lumière incidente (18) sont formés des ressorts de contact (51), qui viennent s'appliquer contre des surfaces de contact (52) de l'unité de contact (23).

12. Eclairage intérieur selon l'une des revendications 1 à 11, caractérisé en ce que l'unité de lumière incidente (18) comporte deux émetteurs de lumière incidente (17), dans lesquels sont insérées des diodes électroluminescentes servant d'éléments d'éclairage (42), dans une paroi extérieure (55) de l'unité de lumière incidente (18), les fils de branchement (53, 54) des éléments d'éclairage (42) étant électriquement reliés à l'intérieur de fentes (56, 57).

13. Eclairage intérieur selon l'une des revendications 1 à 12, caractérisé en ce que la grille estampée (47) de l'unité de lumière incidente (18) est dégagée dans au moins une fente (56), un fil de branchement (53) d'un élément d'éclairage (42) y étant raccordé, et dans une autre fente (57), les fils de branchement (54) restants de l'élément d'éclairage (42) étant reliés par montage intermédiaire d'un composant électronique (58).

14. Eclairage intérieur selon l'une des revendications 1 à 13, caractérisé en ce que l'activation de l'unité de lumière incidente (18) s'effectue par l'intermédiaire d'un interrupteur d'éclairage central.

15. Eclairage intérieur selon l'une des revendications 1 à 14, caractérisé en ce qu'à l'intérieur du boîtier (19) est prévu au moins un interrupteur (14), traversant l'écran (2), qui est relié mécaniquement et/ou électriquement à l'unité de contact (23).

16. Eclairage intérieur selon l'une des revendications 1 à 15, caractérisé en ce que l'écran (2) possède au moins une zone (10) non transparente, associée à l'unité de lumière incidente (18).
